# EUROPÄISCHE PATENTSCHRIFT

(11) **EP 3 521 709 B1**
(45) Veröffentlichungstag und Bekanntmachung des Hinweises auf die Patenterteilung: **29.07.2020**
(21) Anmeldenummer: 18202236.8
(22) Anmeldetag: 24.10.2018
(51) Int. Cl.: F24D 3/14

(54) **VORRICHTUNG FÜR DIE FERTIGUNG VON ROHRMÄANDER**
APPARATUS FOR USE IN PRODUCING PIPE MEANDER
DISPOSITIF DE FABRICATION DE MÉANDRES DE CONDUITES

(30) Priorität: 31.01.2018 AT 500872018
(43) Veröffentlichungstag der Anmeldung: 07.08.2019
(73) Patentinhaber: KE KELIT Kunststoffwerk Gesellschaft m.b.H., 4020 Linz (AT)
(72) Erfinder: Pöchhacker, Martin, 3251 Purgstall (AT)
(74) Vertreter: Hübscher & Partner Patentanwälte GmbH

(56) Entgegenhaltungen:
- WO-A1-2011/046237
- DE-A1- 3 110 383
- DE-A1- 10 150 217
- DE-U1- 29 912 159

## Beschreibung

Die Erfindung bezieht sich auf eine Vorrichtung zur Montage einer Gebäuderohrleitung an einem Halteelement.

Um Gebäuderohrleitungen für Deckenkühlungen und Fußbodenheizungen oder dergleichen möglichst einfach und kompakt verlegen zu können, werden diese üblicherweise zu Mäandern gebogen und zur Fixierung an Haltelementen befestigt. Solche Halteelemente können unter anderem Gitter, Montageschienen oder Halteprofile sein, wie sie beispielsweise aus der AT 513 069 B1 bekannt sind, und ermöglichen durch die Befestigung der Gebäuderohrleitung die Beibehaltung der Mäanderform. Die Montage findet dabei meist direkt vor Ort in den jeweils zu verlegenden Räumlichkeiten statt, da dadurch eine einfache Anpassung an die Gebäudefläche ermöglicht wird. Aus der DE29912159U ist eine Vorrichtung zur Herstellung von großflächig mäanderförmig oder bifilar geformten Rohrsystemen bekannt.

Häufig wird die Befestigung des Mäanders an dem Halteelement durch die Steifigkeit des Materials deutlich erschwert, da diese einer Biegung der Gebäuderohrleitungen zu Mäanderschleifen entgegenwirkt. Daher muss der Mäander zuweilen mit der einen Hand in Form gehalten werden, während mit der anderen Hand versucht wird, eine Befestigung an dem Halteelement zu bewerkstelligen. Zudem muss bei der Biegung von Hand bei jeder Mäanderschleife stets erneut darauf geachtet werden, dass der Biegeradius so gewählt wird, dass ein kompakter Mäander entsteht, ohne dass dabei die Gebäuderohrleitung beschädigt wird. Nachteiligerweise entstehen dabei meist ungleichförmige Mäanderschleifen, die eine Befestigung an den Halteelementen zusätzlich erschweren.

Der Erfindung liegt somit die Aufgabe zugrunde, eine leicht zu transportierende Vorrichtung zur Montage einer Gebäuderohrleitung an einem Halteelement zu schaffen, die eine vereinfachte Montage erlaubt und dabei eine beschädigungsfreie Biegung einer Gebäuderohrleitung zu einem gleichmäßigen, einer Fläche angepassten Mäander ermöglicht.

Die Erfindung löst die gestellte Aufgabe dadurch, dass die Vorrichtung einen Steckrahmen mit zumindest zwei Befestigungsschienen und zumindest eine Führungsschiene aufweist, welche in einem Montagezustand mit den Befestigungsschienen und einer Biegelehre lösbar verbunden ist, wobei die Biegelehre an der der Führungsschiene abgewandten Seite eine Auflage und ein Biegeelement für die Gebäuderohrleitung ausbildet.

Zufolge dieser Maßnahmen wird die Gebäuderohrleitung durch die Biegelehre zu einer Mäanderschleife gebogen, deren Biegeradius durch das Biegeelement vorgegeben wird und die während der Montage durch das Biegeelement fixiert bleibt, beispielsweise durch eine Klemmvorrichtung des Biegeelements. Vorteilhafterweise bleibt daher die Schleifenform während der Befestigung an das Halteelement erhalten und der Biegeradius muss nicht bei jeder Mäanderschleife vom Anwender neu gewählt werden. Darüber hinaus ist durch die Verwendung eines Steckrahmens die Vorrichtung einerseits leicht zu transportieren und kann andererseits durch Zusammenstecken und Befestigung der Biegelehren rasch aufgebaut und so in den Montagezustand gebracht werden. Die Vorrichtung kann auch einfach und rasch an beliebige Montageverhältnisse angepasst werden. Der Montagezustand ist dabei jener Zustand, in dem die Vorrichtung vollständig aufgebaut ist und für den die Montage einer Gebäuderohrleitung an einem Halteelement verwendet werden kann. Zur Montage der Gebäuderohrleitung an das Halteelement wird die Gebäuderohrleitung zunächst von Hand in das Biegeelement eingeführt und dadurch präzise gemäß dem Biegeelement gebogen und gleichzeitig fixiert. Anschließend wird das Halteelement mit der Gebäuderohrleitung verbunden und diese mitsamt dem Halteelement aus der Vorrichtung gehoben. Der aus der Vorrichtung herausgehobene und durch das Halteelement verbundene Mäander kann schließlich an der dafür vorgesehenen Stelle verlegt werden. Die Vorrichtung wird dabei nicht mehr benötigt und kann daher vorteilhafterweise erneut verwendet werden. Da in der Regel Gebäuderohrleitungen großflächig und mit vielen Mäanderschleifen verlegt werden, können an den Befestigungsrahmen gleichzeitig mehrere vorzugsweise parallele Führungsschienen und Biegelehren befestigt werden, wobei die Abstände der Biegelehren zueinander an die Gebäudefläche angepasst werden können. Zu diesem Zweck kann die Führungsschiene mehrere Verbindungstellen entlang ihrer Längsrichtung aufweisen, an welchen die Biegelehre befestigt werden kann. Vorzugsweise weist die Biegelehre dazu an der der Führungsschiene zugewandten Seite Rastzapfen und die Führungsschiene Rastlöcher auf, in welche die Rastzapfen eingreifen können und so die Biegelehre gegen Verschiebungen sichern. Selbstverständlich kann an Stelle der Rastzapfen und der Rastlöcher auch jeder andere lösbare Verbindungsmechanismus verwendet werden, wie beispielsweise eine Klett- oder eine Schnappverbindung. Des Weiteren weisen auch die Befestigungsschienen mehrere Verbindungsstellen entlang ihrer Längsrichtung auf, an welchen die Führungsschiene befestigt werden kann, wodurch insbesondere bei Verwendung mehrerer Führungsschienen die Breite der Mäanderschleifen individuell vorgegeben werden kann. Somit muss nicht für jede Mäanderschleife die Führungsschiene an einer anderen Position an den Befestigungsschienen befestigt werden.

Damit die Gebäuderohrleitung zu einem möglichst kompakten und flachen Mäander geformt werden kann, ist es günstig, wenn in dem Montagezustand an der Führungsschiene ein Stützelement lösbar befestigt ist, welches eine zweite Auflage für die Gebäuderohrleitung aufweist. Das Stützelement verhindert somit ein Durchbiegen der Gebäuderohrleitung auf Grund ihres Eigengewichtes, was insbesondere bei weit ausgedehnten Mäandern für großflächige Räume der Fall sein kann.

Für eine besonders einfache Montage des Halteelements ist es vorteilhaft, wenn die Biegelehre eine Aufnahme für das Halteelement aufweist. Dadurch kann das Halteelement bei der Montage in die Aufnahme eingefügt werden, wodurch dieses gehalten und so gegen Verschiebungen in zumindest eine Richtung gesichert wird. Der Anwender hat demnach bei der Montage beide Hände frei, da von der Vorrichtung sowohl der Mäander, als auch das Halteelement fixiert wird. Darüber hinaus ist es für eine vereinfachte Montage günstig, wenn auch das Stützelement eine Aufnahme für das Halteelement aufweist.

Eine besonders flexible und schnell an die Gebäudeflächengröße anpassbare Vorrichtung ergibt sich, wenn die Führungsschiene an der der Befestigungsschiene zugewandten Seite Befestigungsstifte und die Befestigungsschienen Befestigungslöcher zur Aufnahme der Befestigungsstifte aufweisen. Dadurch kann die Führungsschiene einfach auf die Befestigungsschienen aufgesteckt werden, was insbesondere bei der Verwendung von mehreren Führungsschienen eine schnelle Montage und Demontage des Steckrahmens erlaubt. Um eine schnellere, sichere Verstellung der Biegelehren zu gewährleisten, empfiehlt es sich, wenn den Befestigungsschienen und/oder den Führungsschienen wenigstens ein Maßband zugeordnet ist.

Um eine besonders einfache Biegung der Gebäuderohrleitung zu ermöglichen, ist es günstig, wenn das Biegeelement einen konvexen, vorzugsweise einen halbkreisförmigen, Biegerand ausbildet und auf der im Montagezustand der Führungsschiene abgewandten Seite der Biegelehre zwei an gegenüberliegenden längsseitigen Randbereichen angeordnete Führungsränder zur Biegung der Gebäuderohrleitung aufweist. Dadurch ist es möglich, die Gebäuderohrleitung entlang des Biegerandes zu einer im Wesentlich 180° betragenden Mäanderschleife zu formen und auf besonders einfache Weise zwischen die beiden Führungsränder einzuklemmen und nach Montage an dem Halteelement wieder zu lösen. Auf Grund der Steifigkeit des Materials und der damit verbundenen rückstellenden Wirkung bleibt die Gebäuderohrleitung zwischen den Führungsrändern verkeilt.

Damit ein seitliches Verkippen und Verschieben der Biegelehre im Montagezustand verhindert wird, wird vorgeschlagen, dass die Biegelehre an der der Führungsschiene zugewandten Seite zumindest eine, vorzugsweise zwei, kanalförmige Befestigungsausnehmungen aufweist. Diese kanalförmige Befestigungsausnehmung kann auf die Führungsschiene aufgesteckt werden, wodurch die Biegelehre gegen Verschiebungen und Verkippungen quer zur Längsrichtung der kanalförmigen Befestigungsausnehmungen gesichert ist. Besonders günstige Eigenschaften ergeben sich, wenn die Führungsschiene Rastlöcher und die Biegelehre innerhalb der kanalförmigen Befestigungsausnehmung Rastzapfen aufweist, welche in die Rastlöcher eingreifen können, da die Biegelehre dadurch gegen Verschiebungen sowohl in Längsrichtung, als auch quer zur Längsrichtung der kanalförmigen Befestigungsausnehmungen gesichert ist. Selbstverständlich kann an Stelle der Rastzapfen und der Rastlöcher auch jeder andere lösbare Verbindungsmechanismus, wie beispielsweise eine Klett- oder eine Schnappverbindung, verwendet werden. Um die Stabilität der Vorrichtung im Montagezustand weiter zu erhöhen, ist es bei Verwendung von mehreren Führungsschienen besonders vorteilhaft, wenn die Biegelehre zwei kanalförmige Befestigungsausnehmungen aufweist. Dadurch kann eine Biegelehre auf zwei Führungsschienen aufgesteckt werden, wodurch diese miteinander verbunden werden.

Für eine rasche und unkomplizierte Montage ist es darüber hinaus vorteilhaft, wenn das Halteelement ein Gitter, eine Montageschiene oder ein Halteprofil ist. Dadurch ergeben sich bei der Montage besonders einfache Verhältnisse, da die Maße dieser Halteelemente bekannt sind und die Biegelehren für diese angefertigt werden können.

In der Zeichnung ist der Erfindungsgegenstand beispielsweise dargestellt. Es zeigen
- Fig. 1: eine schematische Draufsicht auf die erfindungsgemäße Vorrichtung im Montagezustand mit einem Gitter als Halteelement,
- Fig. 2: einen Teilbereich der erfindungsgemäßen Vorrichtung in vergrößerter Ansicht mit einer Montageschiene als Halteelement,
- Fig. 3: eine Seitenansicht der erfindungsgemäßen Vorrichtung im Montagezustand,

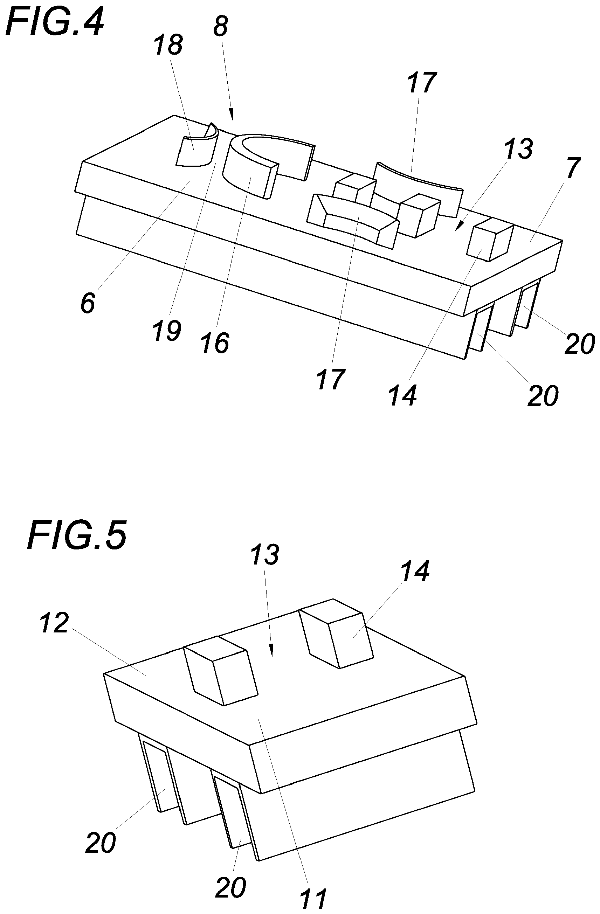

- Fig. 4: eine Biegelehre der erfindungsgemäßen Vorrichtung und
- Fig. 5: ein erfindungsgemäßes Stützelement.

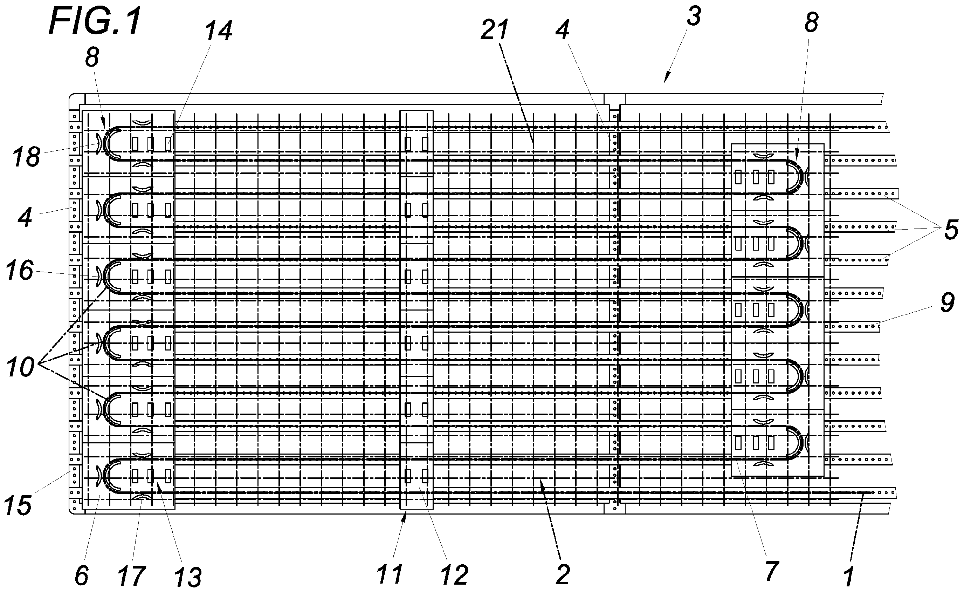

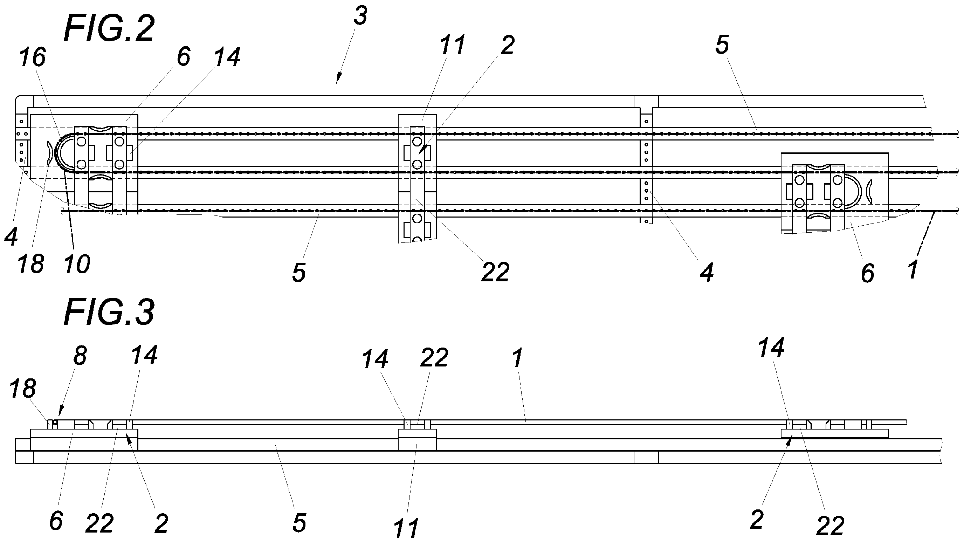

Fig. 1 zeigt den Montagezustand der erfindungsgemäßen Vorrichtung zur Montage einer Gebäuderohrleitung 1 an einem Halteelement 2. Die Vorrichtung weist dabei einen zerlegbaren Steckrahmen 3 mit mehreren parallelen Befestigungsschienen 4 und dazu rechtwinkelig angeordneten parallelen Führungsschienen 5 auf, welche an den Befestigungsschienen 4 lösbar befestigt sind. An den Führungsschienen 5 sind wiederum Biegelehren 6 angebracht, die an der im Montagezustand der Führungsschiene 5 abgewandten Seite jeweils eine Auflage 7 und ein Biegeelement 8 ausbilden. Die Auflage 7 kann durch die Oberfläche der Biegelehre 6 gebildet werden. In der gezeigten Ausführung weisen die Führungsschienen 5 an der im Montagezustand der Biegelehre 6 zugewandten Seite zur lösbaren Verbindung Rastlöcher 9 auf, in welche Rastzapfen (nicht gezeigt) der Biegelehren 6 eingreifen können und die Biegelehre 6 so gegen Verschiebungen sichern. Selbstverständlich kann an Stelle der Rastzapfen und der Rastlöcher 9 auch jeder andere lösbare Verbindungsmechanismus verwendet werden, wie beispielsweise eine Klett- oder eine Schnappverbindung. Durch die lösbare Verbindung der Führungsschienen 5 und der Biegelehren 6 kann die Größe und Form des Mäanders leicht an die zu verlegende Gebäudefläche angepasst werden. In Fig. 1 und Fig. 2 ist der mäanderförmige Verlauf einer Gebäuderohrleitung 1 angedeutet, welche zwischen den Biegelehren 6 hin und her verläuft und durch die Biegeelemente 8 sowohl gebogen, als auch gehalten wird. Die Biegeelemente 8 erzeugen daher die Mäanderschleifen 10, welche die Gebäuderohrleitung 1 zu einem regelmäßigen Mäander formen. Das Halteelement 2 wird dabei in Fig. 1 durch ein Gitter 21, welches von oben auf die Gebäuderohrleitung 1 gelegt wird, und in Fig. 2 und Fig. 3 durch Montageschienen 22 gebildet, welche direkt auf der Oberfläche der Biegelehre 6 aufliegen. Eine Montageschiene 22 kann dabei, wie in den Figuren gezeigt, eine durchgehende Schiene sein oder sich aus einzelnen, kurze Montageschienenstücke zusammensetzen.

Um ein Durchbiegen der Gebäuderohrleitung 1 unter ihrem Eigengewicht zu verhindern, können im Montagezustand zwischen den Biegelehren 6 Stützelemente 11 zur Auflage der Gebäuderohrleitung 1 lösbar an die Führungsschiene 5 angebracht sein. Dazu können auch die Stützelemente 11 Rastzapfen oder einen anderen Verbindungsmechanismus aufweisen, wie beispielsweise eine Klett- oder eine Schnappverbindung. Zur Stützung der Gebäuderohrleitung 1 weist das Stützelement 11 eine zweite Auflage 12 auf, welche durch die Oberfläche des Stützelementes 11 selbst gebildet wird.

Damit das Halteelement 2 während der Montage nicht unbeabsichtigt verschoben werden kann, kann die die Biegelehre 6 eine oder mehrere Aufnahmen 13 für das Halteelement aufweisen. Darüber hinaus kann auch das Stützelement 11 eine oder mehrere Aufnahmen 13 für das Halteelement 2 aufweisen. In den gezeigten Ausführungsformen wird die Aufnahme 13 durch gegenüberliegende Klemmvorsprünge 14 gebildet, zwischen denen das Halteelement 2 eingelegt bzw. eingeklemmt werden kann. Dazu sind in Fig. 2 Montageschiene zu erkennen, welche zwischen den Klemmvorsprüngen 14 eingeklemmt werden und dadurch gegen Verschiebungen quer zur Längsrichtung der Montageschiene gesichert sind. Selbstverständlich wäre es auch denkbar, dass die Aufnahme 13 eine vierseitige Umrandung aufweist oder durch eine Vertiefung in der Biegelehre 6 gebildet wird und so eine Verschiebung von kurzen, gestückelten Montageschienen sowohl in Längsrichtung, als auch quer zur Längsrichtung verhindert wird.

Um ein rasches Auf- und Abbauen der Vorrichtung zu ermöglichen, kann die Führungsschiene 5 an der an der der Befestigungsschiene 4 zugewandten Seite Befestigungsstifte (nicht gezeigt) und die Befestigungsschienen Befestigungslöcher 15 zur Aufnahme der Befestigungsstifte aufweisen.

Damit die Gebäuderohrleitung 1 leicht gebogen und anschließend gehalten werden kann, kann das Biegeelement 8 einen konvexen, vorzugsweise einen halbkreisförmigen, Biegerand 16 ausbilden und auf der im Montagezustand der Führungsschiene 5 abgewandten Seite der Biegelehre 6 zwei an gegenüberliegenden längsseitigen Randbereichen angeordnete Führungsränder 17 zur Biegung der Gebäuderohrleitung 1 aufweisen. Dies ermöglicht die Biegung der Gebäuderohrleitung 1 entlang des Biegerandes 16 zu einer Mäanderschleife 10, welche anschließend auf Grund der rückstellenden Wirkung des Materials der Gebäuderohrleitung 1 zwischen die beiden Führungsränder 17 verkeilt ist. Damit die Gebäuderohrleitung 1 einfacher zu verlegen ist, kann sie vor dem Biegen erwärmt werden, wodurch einerseits mechanische Spannungen im Rohr verringert werden und anderseits eine bessere Formhaltigkeit der Gebäuderohrleitung 1 nach dem Abkühlen gegeben ist, weil damit der Memoryeffekt verringert wird. Zusätzlich ist für das Einklemmen der Gebäuderohrleitung 1 günstig, wenn das Biegeelement 8 einen zusätzlichen Führungsrand 18 ausbildet, der in Längsrichtung der Biegelehre 6 gegenüber dem Biegerand 16 angeordnet ist und mit diesem einen Führungskanal 19 ausbildet.

Um die Biegelehre 6 gegen seitliche Verschiebungen zu schützen, ist es günstig, wenn die Biegelehre 6 an der der Führungsschiene 5 zugewandten Seite eine kanalförmige Befestigungsausnehmung 20 aufweist. Die Biegelehre 6 kann durch Befestigungsausnehmung 20 einfach auf die Führungsschiene 5 aufgesteckt werden. Werden, wie in den gezeigten Ausführungsbeispielen, mehrere Führungsschienen 5 verwendet, kann die Stabilität der Vorrichtung weiter erhöht werden, wenn die Biegelehren 6 zwei oder mehrere kanalförmige Befestigungsausnehmung 20 aufweisen. Die Führungsschienen 5 werden dazu in einem solchen Abstand parallel an die Befestigungsschienen 3 befestigt, dass die Befestigungsausnehmung 20 auf die Führungsschienen 5 aufgesteckt werden können. Die Vorrichtung ist durch diese zusätzliche Verbindung der Führungsschienen 5 besonders gut gegen Verzerrungen geschützt. Selbstverständlich kann auch das Stützelement 11 eine kanalförmige Befestigungsausnehmung 20 aufweisen.

## Patentansprüche

1. Vorrichtung zur Montage einer Gebäuderohrleitung (1) an einem Halteelement (2), **dadurch gekennzeichnet, dass** die Vorrichtung eine Biegelehre (6) und einen Steckrahmen (3) mit zumindest zwei Befestigungsschienen (4) und zumindest eine Führungsschiene (5) aufweist, welche in einem Montagezustand mit den Befestigungsschienen (4) und der Biegelehre (6) lösbar verbunden ist, wobei die Biegelehre (6) an der der Führungsschiene (5) abgewandten Seite eine Auflage (7) und ein Biegeelement (8) für die Gebäuderohrleitung (1) ausbildet.

2. Vorrichtung nach Anspruch 1 oder 2, **dadurch gekennzeichnet, dass** in dem Montagezustand an der Führungsschiene (5) ein Stützelement (11) lösbar befestigt ist, welches eine zweite Auflage (12) für die Gebäuderohrleitung (1) aufweist.

3. Vorrichtung nach Anspruch 1 oder 2, **dadurch gekennzeichnet, dass** die Biegelehre (6) eine Aufnahme (13) für ein Halteelement (2) aufweist.

4. Vorrichtung nach einem der Ansprüche 1 bis 3, **dadurch gekennzeichnet, dass** die Führungsschiene (5) an der der Befestigungsschiene (4) zugewandten Seite Befestigungsstifte und die Befestigungsschienen (4) Befestigungslöcher (15) zur Aufnahme der Befestigungsstifte aufweisen.

5. Vorrichtung nach einem der Ansprüche 1 bis 4, **dadurch gekennzeichnet, dass** das Biegeelement (8) einen konvexen, vorzugsweise einen halbkreisförmigen, Biegerand (16) ausbildet und auf der im Montagezustand der Führungsschiene (5) abgewandten Seite der Biegelehre (6) zwei an gegenüberliegenden längsseitigen Randbereichen angeordnete Führungsränder (17) zur Biegung der Gebäuderohrleitung (1) aufweist.

6. Vorrichtung nach einem der Ansprüche 1 bis 5, **dadurch gekennzeichnet, dass** die Biegelehre (6) an der der Führungsschiene (5) zugewandten Seite zumindest eine, vorzugsweise zwei, kanalförmige Befestigungsausnehmungen (20) aufweist.

## Claims

1. Apparatus for mounting a building pipe (1) on a holding element (2), **characterised in that** the apparatus has a bending gauge (6) and a plug-on frame (3) having at least two fastening rails (4) and at least one guide rail (5) which, in a mounted state, is releasably connected to the fastening rails (4) and the bending gauge (6), wherein the bending gauge (6) forms, on the side facing away from the guide rail (5), a bearing (7) and a bending element (8) for the building pipe (1).

2. Apparatus as claimed in claim 1 or 2, **characterised in that**, in the mounted state, a support element (11) is releasably fastened to the guide rail (5), said support element having a second bearing (12) for the building pipe (1).

3. Apparatus as claimed in claim 1 or 2, **characterised in that** the bending gauge (6) has a receiver (13) for a holding element (2).

4. Apparatus as claimed in any one of claims 1 to 3, **characterised in that** the guide rail (5) has, on the side facing towards the fastening rail (4), fastening pins and the fastening rails (4) have fastening holes (15) for receiving the fastening pins.

5. Apparatus as claimed in any one of claims 1 to 4, **characterised in that** the bending element (8) forms a convex, preferably semi-circular, bending edge (16) and has, on the side of the bending gauge (6) which in the mounting state faces away from the guide rail (5), two guide edges (17) arranged on opposite, longitudinal-side edge regions for bending the building pipe (1).

6. Apparatus as claimed in any one of claims 1 to 5, **characterised in that** the bending gauge (6) has, on the side facing towards the guide rail (5), at least one, preferably two, channel-shaped fastening recesses (20).

## Revendications

1. Dispositif pour le montage d'une conduite de bâtiment (1) sur un élément de maintien (2), **caractérisé en ce que** le dispositif présente un gabarit de cintrage (6) et un cadre à embrocher (3) présentant au moins deux rails de fixation (4) et au moins un rail de guidage (5), qui sont assemblés de façon séparable dans un état de montage aux rails de fixation (4) et au gabarit de cintrage (6), dans lequel le gabarit de cintrage (6) forme sur le côté situé à l'opposé du rail de guidage (5) un appui (7) et un élément de cintrage (8) pour la conduite de bâtiment (1).

2. Dispositif selon la revendication 1 ou 2, **caractérisé en ce qu'**un élément de support (11), qui présente un deuxième appui (12) pour la conduite de bâtiment (1), est fixé de façon séparable au rail de guidage (5) dans l'état de montage.

3. Dispositif selon la revendication 1 ou 2, **caractérisé en ce que** le gabarit de cintrage (6) présente un logement (13) pour un élément de maintien (2).

4. Dispositif selon l'une quelconque des revendications 1 à 3, **caractérisé en ce que** le rail de guidage (5) présente des tiges de fixation sur le côté tourné vers le rail de fixation (4), et les rails de fixation (4) comportent des trous de fixation (15) destinés à recevoir les tiges de fixation.

5. Dispositif selon l'une quelconque des revendications 1 à 4, **caractérisé en ce que** l'élément de cintrage (8) forme un bord de cintrage (16) convexe, de préférence semi-circulaire, et présente, sur le côté du gabarit de cintrage (6) situé à l'opposé du rail de guidage (5) dans l'état de montage, deux bords de guidage (17) disposés au niveau de régions de bord opposées en longueur pour le cintrage de la conduite de bâtiment (1).

6. Dispositif selon l'une quelconque des revendications 1 à 5, **caractérisé en ce que** le gabarit de cintrage (6) présente sur le côté tourné vers le rail de guidage (5), au moins un, de préférence deux, évidement(s) de fixation en forme de canal (20).
